Europäisches Patentamt

European Patent Office

Office européen des brevets

(19)

(11) Publication number: **0 145 812**
A2

## (12) EUROPEAN PATENT APPLICATION

(21) Application number: **83113168.5**

(22) Date of filing: **28.12.83**

(51) Int. Cl.⁴: **B 29 C 67/18**, B 29 C 65/70
// A41D27/24

---

(30) Priority: **30.12.82 US 454635**

(43) Date of publication of application: **26.06.85**
**Bulletin 85/26**

(84) Designated Contracting States: **AT BE CH DE FR GB IT LI NL SE**

(71) Applicant: **Orreus Limited, Sussex House Hobson Street, Cambridge (GB)**

(72) Inventor: **Molde, Bradley J., 1 Station Road Fulbourn, Cambridge (GB)**
Inventor: **Molde, Maurene, 18 Grafton Street, Cambridge (GB)**

(74) Representative: **Waldman, Ralph David, 50 Station Road Fulbourn, Cambridge CB1 5ES (GB)**

---

(54) Treating cloth material.

(57) The unfinished edges of marginal portions of flexible cloth or cloth-like material such as that used to make surgical drapes are bound by moulding onto the marginal portions a bond of curable elastomeric adhesive to encapsulate the unfinished edges and then curing the adhesive to form a flexible binding.

EP 0 145 812 A2

## Treating Cloth Material

This invention relates to treatment of a cloth-like material.

It is known from U.S. Patent 2,952,022 to form a waterproof garment by joining sections of fabric coated with a waterproof material together by stitching the seams and then coating the seams with a rubber or vinyl cement or heat sealing the material together. Such a procedure is time consuming, since both stitching and a gluing or sealing operation are necessary.

We have now devised a simple method of binding the edge portions of the cloth-like material together in a simple, one-stage process.

According to the invention, there is provided a method for binding the unfinished edge of marginal portions of flexible cloth or cloth-like material which comprises moulding on said marginal portion a band of curable elastomeric adhesive to encapsulate said unfinished edge and thereafter curing said adhesive to form a flexible binding.

By the term curable adhesive is meant one in which an irreversible chemical reaction occurs during the curing phase and which substantially retains its original physical properties on heating to temperatures in the region of $160^{o}$ C. Generally, the adhesive is a polyurethane based adhesive and usually comprises two components which react together on mixing to form the cured adhesive. To speed the curing process, heating may be applied but by choosing an appropriate adhesive, heating may not be necessary.

As will be appreciated, the method of the invention can be applied to join two pieces of cloth-like material together. If desired, however, it can also be applied to single pieces of material which have marginal portions with unfinished edges that require binding.

The invention thus finds wide applicability. A particularly useful aspect is in connection with cloth or cloth-like garments or drapes, and particularly with regard to surgical drapes used during surgical procedures for placing a bacteria-proof barrier between the aseptic operating field and areas which cannot or need not be kept sterile.

In many instances, specialized surgical drapes are provided for particular procedures and may be furnished with an opening or fenestration in the drape through which the surgeon operates. The fenestration is commonly of a circular or oval shape and is provided with some type of binding along its edge for reinforcing purposes.

Conventionally the binding is accomplished by sewing or stitching a marginal seam.

It has been found that the cloth of cloth-like materials used in the constuction of such drapes, whether of the disposable or non-disposable variety, may show a tendency to lint or unravel, thereby contaminating the surgical field. A sewn or stitched seam surrounding the fenestration may not always solve the problem.

Furthermore, the small openings produced by the stitching provide areas where blood or other fluids as well as microorganisms can collect. In the case of reusable surgical drapes, it has been found particularly difficult to keep these areas free of lint and particles which will be located next to the operating field during use.

Similar drawbacks have been noted with seams and edge bindings used with conventional cloth or cloth-like garments or drapes which also provide small openings in the stitched areas where fluids can strike through and microorganisms can collect. Furthermore, it has also been found that conventional seams, edge bindings and reinforced fenestrations produce a multiple thickness area of folded over fabric which is relatively stiff and unyielding. Consequently, particularly in the case of surgical drapes, the drape may not conform to the shape of the underlying area making access difficult for the surgeon.

The method of the present invention overcomes these disadvantages and can thus be directed to edge binding and seaming as well as fenestration reinforcement of garments and drapes, particularly those used in the surgical field. The invention is particularly valuable when directed to drapes or garments of the non-disposable type, since the adhesive will withstand repeated laundering and sterilization.

In one aspect of the invention, the material is first cut to the proper size exposing the raw edges. The edges of the material are then placed between cooperating mould cavities, which may be vacuum assisted, and a polyurethane adhesive injected into the cavity along the raw edge in a configurated shape to completely encapsulate the unfinished edges. The adhesive is then cured to form a flexible binding which is able to withstand repeated laundering and autoclaving treatments.

The polyurethane adhesive is specially formulated to be able to withstand the temperatures and humidity associated with repeated laundering and autoclaving treatments without hydrolyzing or otherwise deteriorating. Since the temperatures commonly associated with autoclave apparatus are in the range of $140 - 150^{\circ}C$, the use of the polyurethane adhesive in the present invention not only prevents the moulded edge binding from softening at high autoclaving temperatures but also permits the binding to withstand repeated washings or dry cleaning treatments. Furthermore, this type of moulded material binding results in a soft flexible hand which avoids sharp or stiff edges and permits the drape to conform to the underlying shape.

In situations where sections of drapes or garments must be edge joined by means of a seam, the individual sections are first cut to the desired pattern and slightly overlapped along the desired seam line. The overlapped portions are then provided with a series of spaced openings which permit the adhesive to flow through both of the sections in order to create a strong bond.

The overlapping portions are then placed between cooperating moulds having a mould cavity lying along the seam line. Polyurethane adhesive is then forced into the cavity so as to produce a configured seam of the proper shape and size. The adhesive is then cured, with or without the aid of heat, to form a flexible binding having the ability to withstand repeated laundering and autoclaving treatments as described hereinabove in connection with the edge binding process.

The reinforced fenestration is formed in a somewhat similar manner. An opening of the proper size is first cut in the garment or drape. An injection mould is clamped onto the drape surrounding the die cut opening and a metered quantity of the two part polyurethane adhesive injected into the mould. The mould cavity is configured to form a contoured area of the adhesive on both sides of the drape surrounding the fenestration to encapsulate the raw edge of the opening. The adhesive is then cured to form a flexible reinforced area able to withstand repeated autoclaving and laundry treatments as described hereinabove.

In another aspect of the invention, it may be preferable to butt the edges of the two pieces of material rather than overlap them. This is particularly so when joining relatively thick material, e.g. that used in making "wet suits", as used in water sports or in diving suits. Such garments are currently made from polyurethane coated nylon or neoprene laminated to a nylon fabric. The configuration of the edges will affect the strength of the join and in such a butt type join, it is preferred that the edges are serrated or pinked.

The invention is illustrated with reference to the accompanying drawings in which:

Fig. 1 is a fragmentary partially cross sectioned side elevation view of a first embodiment for injection moulding the edge binding of a laminated fabric.

Fig 2 is an enlarged fragmentary cross sectional view of an edge binding formed with the apparatus of Fig. 1.

Fig. 3 is a top plan view of the lower mould member of the apparatus of Fig. 1.

Fig. 4 is a fragmentary top plan view of an edge binding formed with the present invention.

Fig. 5 is a fragmentary side elevation partially cross sectional diagrammatic view of a first embodiment for providing a moulded seam to join overlapping fabric segments.

Fig. 6 is a fragmentary enlarged cross sectional view of a seam formed with the apparatus of Fig. 5.

Fig. 8 is an enlarged fragmentary top plan view of a seam formed with the apparatus of Fig. 5.

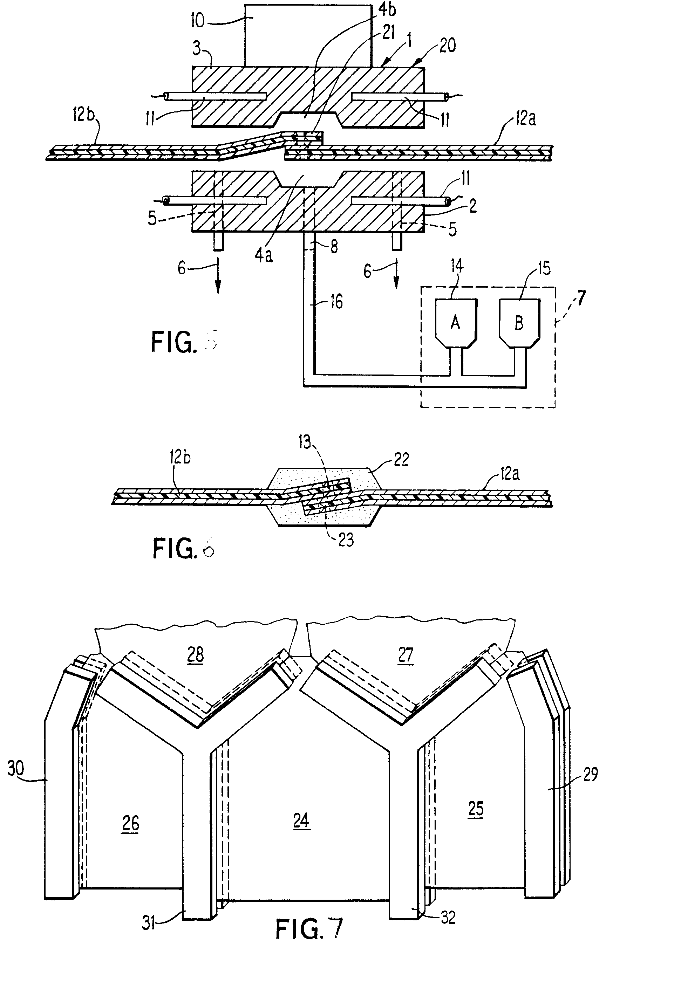

Fig. 7 is a diagrammatic top plan view illustrating multiple moulds for forming the edge binding and seams of sections of a surgical gown.

Fig. 12 is a front elevation diagrammatic view of moulding apparatus for joining the collar and sleeve seams of a surgical garment.

Fig. 13 is a top plan view of moulding apparatus for forming the edge seams of a surgical drape.

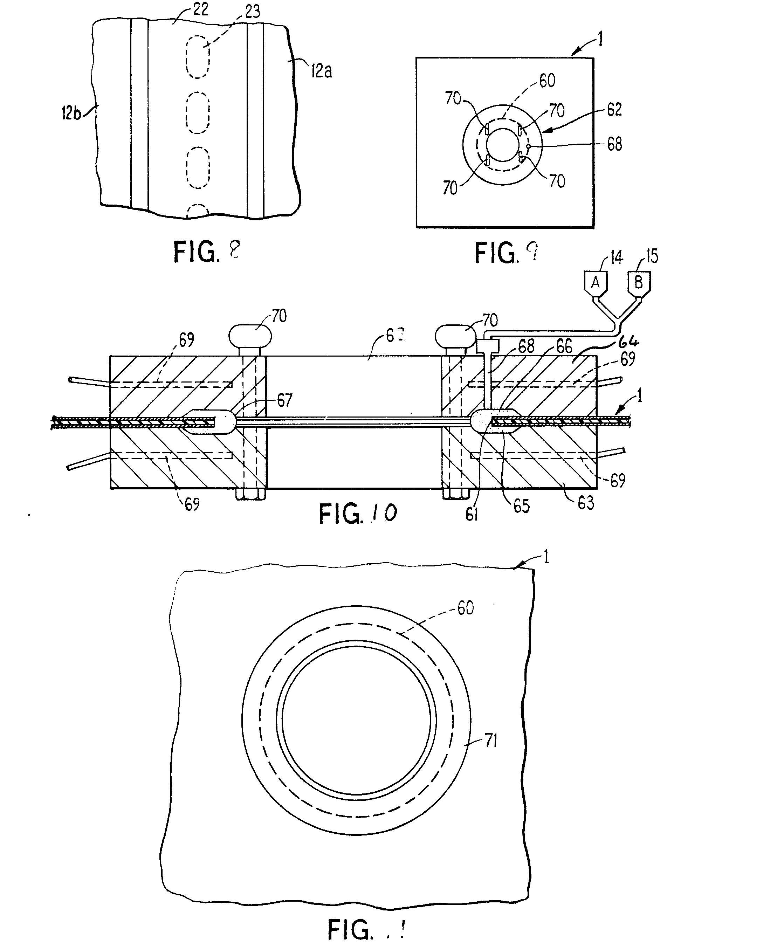

Fig. 10 is a fragmentary diagrammatic cross sectional side elevation view of apparatus for moulding a fenestration reinforcement.

Fig. 9 is a reduced top plan view of the apparatus of Fig. 10.

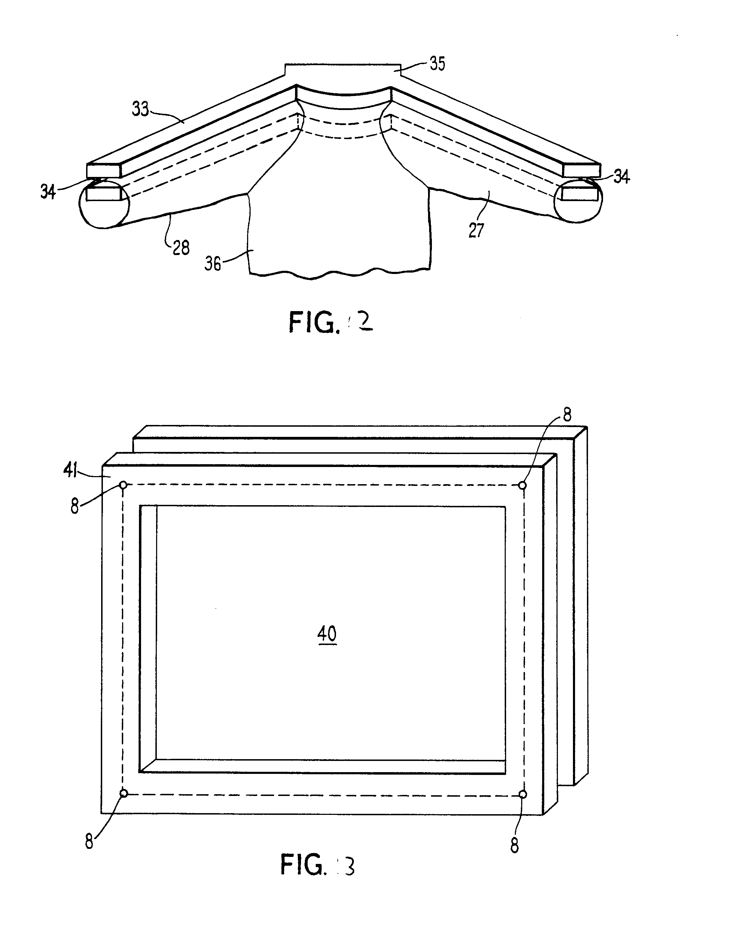

Fig.11 . is an enlarged fragmentary top plan view of a completed fenestration reinforcement made in accordance with the present invention.

## DETAILED DESCRIPTION

As noted above, the present invention is applicable to all types of garments and drapes, with particular application to surgical garments and drapes. Such a drape includes outer layers of soft flexible fabric or fabric-like material with an inner layer of moisture and microorganism impervious plastic film. Such structures are well known in the art and are described, for example, in U.S. Patent No. 3,809,077 issued May 7, 1974, to P.E. Hensen and U.S. Patent No. 4,194,041 issued March 18, 1980, to R. W. Gore et al. One of the outer layers may be a polyester continuous filament yarn woven in a poplin, twill or regular broadcloth weave, while the other outer layer may be polyester continuous filament yarn woven in a Tricot knit. Alternatively, the woven outer layer may be replaced by a Tricot or other knit, so that both outer layers are knitted. The middle layer comprises an expanded polytetrafluoroethylene film that is substantially microporous so as to be waterproof but air permeable. One such film is manufactured under the name Gore-Tex by W. L. Gore and Associates, Inc., of Newark, Delaware, and is described in the aforementioned Gore et al patent.

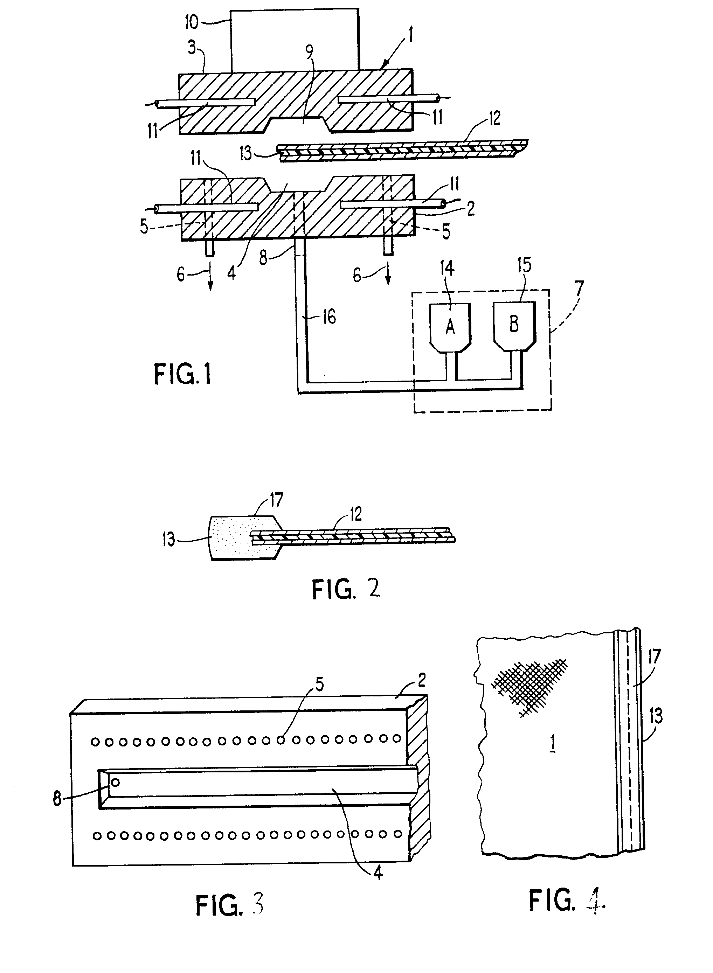

This type of cloth-like material is particularly suited for surgical applications, and may be used for making surgical garments, drapes, and the like. As is well known, when this material is cut to a particular size, some type of edge binding must be provided to prevent delaminating or unraveling of the raw cut edge. A method and apparatus of a first embodiment for providing an edge binding in accordance with the present invention is illustrated in Fig. 1 - Fig.4.

The edge binding apparatus is shown in diagrammatic form generally at 1 in Fig. 1 and includes a lower stationary mould member 2, and an upper vertically movable mould member 3.

As best shown in Fig.3 , lower mould member 2 comprises a block-like structure which may be fabricated from steel or other suitable material, bearing a longitudinally extending relatively narrow groove-like mould cavity 4. In general, the depth and width of mould cavity 4 will be dimensioned to correspond to the finished dimensions of the lower part of the desired edge binding. Furthermore, the mould cavity and portions of the mould member adjacent the mould cavity may be coated with a non-stick material such as polytetrafluoroethylene to facilitate release of the polyurethane adhesive.

A plurality of spaced vacuuming positioning ports or openings, one of which is illustrated at 5, are positioned in a straight line running parallel to mould cavity 4 on either side of the cavity and assist in holding the material to be treated against the mould as will be described in more detail hereinafter. Vacuum positioning ports 5 may be connected to a common manifold or individually to a suitable vacuum source, illustrated diagrammatically by arrows 6.

The fluid adhesive from a source of supply designated generally at 7 is applied to injection port 8 in the lower mould member.

Upper mould member 3 also comprises a block-like structure having an upper mould cavity 9 similar in size and configuration to lower mould cavity 9. It will be understood that the finished configuration of the edge binding will assume the shape of mated mould cavities 4 and 9. Upper mould member 3 may also be vertically raised and lowered by means of a supporting structure illustrated generally at 10. This permits the mould members to be separated so that a sheet of material may be placed therebetween, and thereafter to be brought together to enable the adhesive to be injected under pressure in the mould cavities.

Lower mould member 2 and upper mould member 3 are also provided with electrical resistance heating elements 11 which operate to accelerate the curing of the adhesive material, if desired.

In operation, a sheet of multiple layer cloth-like material 12 of the type described hereinabove having raw cut edge 13 is disposed in a generally horizontal orientation between the upper and lower mould members, and may be supported by means not shown. Cut edge 13 is positioned so as to approximately bisect lower mould cavity 4.

A vacuum is applied from vacuum source 6 to vacuum positioning ports 5 which operates to hold the lower surface of sheet 12 tightly against the upper planar surface of lower mould member 2. The upper mould member 3 is then lowered by supporting structure 10 so that the lower planar surface of the mould member press tightly against the upper surface of multiple layer sheet material 12, thus forming a composite mould cavity surrounding the cut edge 13.

A suitable fluid moulding material is then injected into injection port from supply 7. In the embodiment illustrated in the present invention, the edge binding for sheet 12 is formed from a two part polyurethane adhesive. The adhesive material preferably has a softening temperature of at least $160^{o}$C, and more preferably a softening temperature of at least $260^{o}$C with the ability to withstand a steam environment without hydrolyzing.

An adhesive material which has been found to give satisfactory results is a two-part polyurethane adhesive manufactured under the designation XGL 8-11B by Fluid Polymer Systems, Inc. of El Cajon, California. Under normal circumstances, in order to provide the properties described hereinabove, the adhesive will be mixed in the ratio of 100 parts A to 35 parts B. However, the resulting hand of the edge binding may be adjusted by a corresponding change in the proportions of the adhesive constituents. When the components are mixed stoichiometrically, a chemical reaction occurs wherein the molecules cross link in a polymerization process. It has been found that the additional of heat speeds up the curing process. In addition, a chemical accelerator can be added to further aid the polymerization process and adjust the cure time.

In the present method, the fluid adhesive part A and part B components are stored in separate hopper-like receptacles 14 and 15, respectively until ready to be mixed for use, as shown in Fig. 1. Alternatively, the adhesive components may be mixed and stored in a single receptacle. As illustrated in Fig. 1, the adhesive components are mixed in a supply conduit 16 and supplied to injection port 8 under pressure for injection into the mould cavity. As noted above, electric heating elements 11 may be used to accelerate the cure time.

After the adhesive has cured, the upper and lower mould members may be separated to produce the edge binding 17 as illustrated in Fig. 2 and Fig.4. The resulting cured thermoplastic adhesive layer extends beyond the raw cut edge 13 of sheet 12 so that the adhesive encapsulates the unfinished edge of the sheet material. Furthermore, the edge binding also extends along the peripheral edge and the upper and lower surfaces of the sheet material. As a result of the shape of the mould, the finished edge binding is configured to a smooth cross sectional profile devoid of sharp edges. It will be understood that the particular shape of the edge binding may be modified as required. It will be further understood that the cured polyurethane adhesive edge binding produces a soft, flexible edging having the ability to withstand repeated laundering and autoclaving treatments without deterioration. Further, the edge binding is fluid impervious, thereby preventing infiltration of blood, microorganisms and the like.

A similar process for fabricating a moulded seam between adjoining fabric or fabric-like panels is illustrated in Fig. 5,6,and 8 ., where elements similar to those previously described have been similarly designated.

The seaming apparatus, illustrated generally at 20 in Fig. 5, is similar in construction and operation to the edge binding apparatus previously described. The major difference is that the lower and upper mould cavities 4a and 4b, respectively, are somewhat wider to accommodate the overlapped sections of the sheet materials. The sheet portions, 12a and 12b, are slightly overlapped as at 21 and positioned so as to lie within the mould cavities. The upper and lower mould members are then brought together, and fluid adhesive injected under pressure into injection port 8. When the adhesive has cured, the mould members are separated, producing the mould configured seam 22 as shown in Fig.6 and Fig. 8. It will be observed that the seam is configured to the shape of the mould cavity to result in a soft flexible seam extending on both sides of the sheet which avoids sharp or stiff edges and permits the drape to conform to the underlying shape.

In order to facilitate the penetration and binding of the adhesive, a plurality of openings or perforations 23 may be provided by die cutting, laser cutting or the like in each of the sheet portions 12a and 12b. When the adhesive is injected into the mould cavity under pressure, it will flow through the openings, thereby securely joining the sheet portions together.

Apparatus using the inventive principles just described to form a complete surgical gown are illustrated diagrammatically in Fig. 7 and Fig. 12. For purposes of an exemplary showing, the completed gown is to be formed from individual fabric or fabric-like parts comprising a gown front 24, a left gown side and half back 25, a right gown side and full back 26, a left sleeve 27, and a right sleeve 28. Each of these gown portions is provided flat, with the peripheral edges perforated as described hereinabove in those locations where a seam is to be formed. An edge binding is formed along the outside peripheral edge of left gown sided half back 25 by an elongated dog leg-shaped moulding apparatus 29 constructed substantially as previously described in connection with the embodiment of Fig. 1. Similarly, the outside peripheral edge of right gown side and full back 26 is provided with a moulded binding by means of a dog leg-shaped moulding apparatus 30 also similar to that described above in the embodiment of Fig. 1, but of opposite shape to moulding apparatus 29.

The moulded seams joining the individual gown elements are provided by a pair of Y-shaped seaming moulds 31 and 32, respectively, constructed utilizing the inventive principles embodied in the apparatus of Fig. 5. For example, seam mould 31 forms a moulded seam 22 between gown front 24 and gown side and full back 26, between gown front 24 and a portion of right sleeve 28, and between gown side and full back 26 and a portion of right sleeve 28. Similarly, seam mould 32 forms a moulded seam 22 between gown front 24 and left gown side and half back 25, gown front 24 and a portion of left sleeve 27, and gown side and half back 25 and a portion of left sleeve 27. It will be understood that mould apparatus 29,30,31 and 32 may be operated simultaneously, through a common raising and lowering mechanism, or may be operated individually. Alternately, the various seams and edge bindings may be individually fabricated as described hereinabove.

In the exemplary embodiment shown, the seams and collar may be completed as illustrated in Fig.12.. Here, sleeve portions 27 and 28 are formed in tubular shapes to form the finished sleeves, with the peripheral longitudinal edges of the unfinished sleeves overlapping slightly as at 34. Seaming apparatus 33 may then be utilized to complete the moulded seam along the overlapping portions of the sleeves. Furthermore, the central semi-circular shaped portion of the apparatus 33 designated as 35 in Fig.12 may be used to mould a peripheral edging or binding along the upper opening of the gown 36 to form a collar portion. It will be understood that collar forming portion 35 of apparatus 33 operates in a manner similar to that previously described in connection with the embodiment of Fig. 1. It will be further understood that other unfinished portions of the gown, if any, may also be edge bound using moulded bindings, if desired.

Fig.13 illustrates a method for producing an edge binding around the outer periphery of a generally rectangular laminated surgical drape, shown generally at 40. It will be understood that the drape may be made of any suitable material, and in particular the multiple layer fabric-like material previously described. In this embodiment, the edge binding mould 41 is generally rectangular in shape, with each side of the mould 41 being configured similarly to that described in connection with the edge binding mould described in Fig. 1. In this embodiment, a plurality of injection ports, designated schematically at 8 in Fig.13, may be used to inject the fluid adhesive under pressure into the mould cavity. The resulting apparatus 41 produces a moulded peripheral edge around the outer periphery.of the drape which serves to prevent the laminating or unraveling of the raw cut edge, and is further resistant to repeated laundering or dry cleaning operations, particularly autoclaving treatments, in the same manner as previously described.

In many types of garments or drapes, openings of various types are required, such as fenestrations in surgical drapes. Apparatus for reinforcing the edges of such openings or fenestrations is illustrated in the embodiment of Fig. 10 - Fig. 11.

Initially, a suitable shaped opening 60 is die cut in the sheet 1, thereby producing a raw cut edge 61 around the inner periphery of the opening. The fenestration moulding apparatus, shown generally at 62, is then clamped over opening 60.

Moulding apparatus 62 is generally toroidal-shaped, and is provided with a separate lower half 63 and an upper half 64. The upper surface of lower half 63 is provided with a channel or groove 65. The shape of channel or groove 65 corresponds to the shape of opening 60. In the case of a circular opening, the channel or groove will have an inner diameter slightly less than the diameter of opening 60 in sheet 1, and an outer diameter slightly greater than the diameter of opening 60. The depth of channel or groove 65 will be such as to produce a reinforced edging of the proper thickness around the opening 60.

The lower surface of upper half 64 is provided with a similarly configured and dimensioned channel or groove 66. As best shown in Fig. 10, when the upper and lower halves are mated together, channels 65 and 66 combine to form a mould cavity 67 which will produce a moulded edging around die cut opening 60 of the proper shape, thickness and cross-sectional profile.

Upper half 64 is also provided with an injection port 68 for admitting fluid adhesive from sources of supply 14 and 15 into mould cavity 67. Either lower half 63 or upper half 64, or both, may be provided with heating means, such as resistance heating element 69, for supplying heat to assist in curing the liquid adhesive.

In operation, the upper and lower halves are positioned on sheet 1 so that the cut edge 61 lies within mould cavity 67. The mould halves may be secured tightly together by means of threaded thumb screws 70 or air pressure clamps. Liquid adhesive may then be injected into injection port 68 to fill mould cavity 67. After the adhesive has cured at the proper temperature and pressure for the desired length of time, the mould halves may be removed to produce the finished fenestration reinforcement 71 illustrated in Fig. 11.

As described hereinabove, the specific type of elastomeric adhesive used for the reinforcement 71 results in a soft flexible hand which avoids sharp or stiff edges and permits the surgical drape to conform to the underlying shape. At the same time, the reinforcement is highly resistant to repeated laundering and autoclaving treatments, and also is impervious to blood and microorganisms.

## CLAIMS

1. A method for binding the unfinished edge of marginal portions of flexible cloth or cloth-like material which comprises moulding on said marginal portion a band of curable elastomeric adhesive to encapsulate said unfinished edge and thereafter curing said adhesive to form a flexible binding.

2. A method according to claim 1 wherein said adhesive comprises a polyurethane adhesive.

3. A method according to claim 1 or 2 wherein said cured adhesive forms a finished binding having a softening temperature of at least about 160°C and substantially resistant to hydrolyzation.

4. A method according to any one of the preceding claims wherein said cloth material comprises a thin layer of an expanded polytetrafluorethylene plastic film sandwiched between the respective outer layers of a polyester continuous filament yarn woven in a poplin, twill or broadcloth weave, and a continuous filament yarn woven in a Tricot knit.

5. A method according to any one of the preceding claims wherein said moulding step is preceded by the step of cutting an opening in the sheet material such that the periphery of said opening forms said unfinished marginal portion.

6. A method according to any one of claims 1 to 4 wherein said moulding step is preceded by the step of overlapping the marginal portion of one sheet of cloth or cloth-like material on top of the marginal portion of another sheet of cloth or cloth-like material in order to form a moulded seam joining said sheets.

7. A method according to any one of claims 1 to 4 wherein said moulding step is preceded by the step of butting the marginal portion of one sheet of cloth or cloth-like material against the marginal portion of another sheet of cloth or cloth-like material in order to form a moulded seam joining said sheets.

8. A method according to any one of the preceding claims wherein said moulding step is preceded by the step of perforating said sheet to form a plurality of spaced openings, said adhesive being forced through said openings to adhere to both sides of the sheet material.

9. A method according to any one of the preceding claims wherein said adhesive is injection moulded by means of a closed mould cavity on said marginal portion to produce a band of predetermined cross-sectional profile.

0145812

1/4

FIG.1

FIG. 2

FIG. 3

FIG. 4

0145812

2/4

FIG. 5

FIG. 6

FIG. 7

FIG. 8

FIG. 9

FIG. 10

FIG. 11

35

33

34          34

28    27

36

**FIG. 2**

8

41

8

8

40

8          8

**FIG. 3**